# EUROPÄISCHE PATENTANMELDUNG

(11) **EP 1 914 459 A1**
(43) Veröffentlichungstag der Anmeldung: **23.04.2008**
(21) Anmeldenummer: 07018166.4
(22) Anmeldetag: 15.09.2007
(51) Int. Cl.: F16K 37/00

(54) **Ventilanordnung mit Positionssensor**

(30) Priorität: 21.10.2006 DE 102006049724
(71) Anmelder: Robert Bosch GmbH, 70184 Stuttgart (DE)
(72) Erfinder: Witte, Torsten, 97816 Lohr am Main (DE); Manecke, Peter, 97833 Frammersbach (DE); Hahn, Harald, 97843 Neuhütten (DE); Graf, Peter, 97816 Lohr am Main (DE); Imhof, Rainer, 97833 Frammersbach (DE)
(74) Vertreter: Thürer, Andreas

(57) **Zusammenfassung**

Offenbart ist eine Ventilanordnung mit einem Ventilgehäuse (2) in dem zumindest ein Ventilelement (22) verschiebbar geführt ist, wobei mindestens ein Magnetfeldsensor (28) zur Positionserkennung des Ventilelements (22) vorgesehen ist, der von dem Magnetfeld zumindest eines an dem beweglichen Ventilelement (22) angeordneten Permanentmagneten (30) beaufschlagt ist. Erfindungsgemäß ist der Permanentmagnet (30) relativ zu dem Magnetfeldsensor (28) drehfest aber axial verschiebbar in dem Ventilgehäuse (2) geführt.

## Beschreibung

Die Erfindung betrifft eine Ventilanordnung gemäß dem Oberbegriff des Patentanspruchs 1.

Eine derartige Ventilanordnung mit Positionssensor ist beispielsweise aus der EP 1 184 611 B1 bekannt. Diese herkömmliche Ventilanordnung hat ein Ventilgehäuse mit einer Schieberbohrung, in der ein Ventilschieber geführt ist, der mittels Pilotventilen derart ansteuerbar ist, dass eine Druckmittelströmung von einem Pumpenanschluss bzw. einem Tankanschluss zu Arbeitsanschlüssen auf- oder zusteuerbar ist. Bei dieser Lösung ist ein Magnetfeldsensor zur Positionserkennung des Ventilschiebers vorgesehen, der von dem Magnetfeld eines an diesem angeordneten ringförmigen Permanentmagneten beaufschlagt ist. Der Magnetfeldsensor ist in einem Vorsprung eines nichtmagnetischen Gehäuseteils aufgenommen, der sich in eine Ausnehmung des Ventilgehäuses erstreckt, so dass der Magnetfeldsensor im Bereich der Magnetfeldlinien des Permanentmagneten positioniert ist. Der Magnetfeldsensor erfasst die Größe des von dem Permanentmagneten erzeugten und an der entsprechenden Stelle im Bereich des Magnetfeldsensors wirkenden Magnetfeldes, so dass durch Positionserkennung des Magneten mittels des Magnetfeldsensors die Position des Ventilschiebers des Wegeventils erfasst werden kann. Insbesondere dient der Magnetfeldsensor als Positionsgeber eines Druck- oder Wegeventils zur Überwachung einer Ventilstellung, beispielsweise einer End- oder Mittelstellung, oder .als Weggeber eines. Proportional-Wegeventils.

Nachteilig bei derartigen Ventilanordnungen ist, dass sich der Permanentmagnet relativ zu dem Magnetfeldsensor drehen kann, wobei sich das auf den Magnetfeldsensor wirkende Magnetfeld des Permanentmagneten aufgrund der inhomogenen Ausrichtungen des Magnetmaterials, sowie durch Form- und Lagetoleranzen der Permanentmagnete und deren Aufnahmen ändert, so dass ein inhomogenes Magnetfeld auftritt und die Messergebnisse vielfach den hohen Anforderungen an die Positionsermittlung des Ventilschiebers nicht genügen.

Demgegenüber liegt der Erfindung die Aufgabe zugrunde, eine Ventilanordnung zu schaffen, bei der gegenüber herkömmlichen Lösungen eine verbesserte Positionsermittlung eines Ventilelements ermöglicht ist.

Diese Aufgabe wird durch eine Ventilanordnung mit den Merkmalen des Patentanspruchs 1 gelöst.

Die erfindungsgemäße Ventilanordnung hat ein Ventilgehäuse in dem zumindest ein Ventilelement verschiebbar geführt ist, wobei mindestens ein Magnetfeldsensor zur Positionserkennung des Ventilelements vorgesehen ist, der von dem Magnetfeld zumindest eines an dem beweglichen Ventilelement angeordneten Permanentmagneten beaufschlagt ist. Erfindungsgemäß ist der Permanentmagnet relativ zu dem Magnetfeldsensor drehfest aber axial verschiebbar in dem Ventilgehäuse geführt. Bei der erfindungsgemäßen Lösung wird gegenüber dem Stand der Technik gemäß der EP 1 184 611 B1 ein im Wesentlichen homogenes Magnetfeld des Permanentmagneten während der Axialverschiebung (Hubbewegung) des Ventilelements erreicht, so dass die Messergebnisse des Magnetfeldsensors auch hohen Anforderungen an die Positionsermittlung des Ventilschiebers genügen. Der zumindest eine Permanentmagnet ist derart in oder auf dem längsbeweglichen Ventilelement angeordnet, dass die Größe und Richtung des Magnetfelds der Permanentmagnete eine entsprechende Ausgangsspannung des Magnetfeldsensors in Abhängigkeit des Magnethubs hervorrufen. Die geometrischen Abmessungen sowie die werkstoffabhängige Feldstärke der Permanentmagnete und deren Abstand zu dem Magnetfeldsensor bestimmen hierbei die Magnethub/Magnetfeldsensor-Ausgangssignal-Charäkteristik.

Gemäß einem besonders bevorzugten Ausführungsbeispiel ist das Ventilelement über zumindest eine Verdrehsicherung drehfest aber axial verschiebbar in dem Ventilgehäuse geführt. Als besonders, vorteilhaft hat es sich erwiesen, wenn die Verdrehsicherung zumindest ein in einer Schiebekulisse geführtes Führungselement aufweist.

Das Führungselement ist bei einem erfindungsgemäßen Ausführungsbeispiel als Zylinderstift ausgebildet, der in das Ventilelement oder eine diesem zugeordnete Führungshülse eingesetzt und abschnittsweise mit einer als Schiebekulisse wirkenden, etwa nutförmigen Ausnehmung der Führungshülse bzw. des Ventilelements in Eingriff ist.

Bei einer alternativen Ausbildung der Erfindung erfolgt die Verdrehsicherung mittels zumindest einer Abflachung des Ventilelements, die mit mindestens einer Abflachung der Führungshülse als Verdrehsicherung zusammenwirkt. Hierbei hat es sich als vorteilhaft erwiesen, die Abflachung als tangential in die Führungshülse eingebrachte Einprägung auszubilden. Die Einprägung kann beispielsweise fertigungstechnisch einfach mittels eines Prägewerkzeugs mit Gegenhalter konturnah in die Führungshülse eingebracht werden. Beispielsweise ist das Ventilelement als etwa sechskantförmiges Rohr ausgebildet, das über zumindest eine Seitenfläche in Anlage an die Einprägung der Führungshülse gebracht und dadurch drehfest geführt ist.

Die Verdrehsicherung ist vorzugsweise im Bereich des Magnetfeldsensors angeordnet, so dass eine ggf. auftretende Torsion des Ventilelements die Messgenauigkeit im Wesentlichen nicht beeinflusst.

Erfindungsgemäß wird es besonders bevorzugt, wenn dem Magnetfeldsensor zumindest ein magnetisierbares Material zur Flusskonzentration des von dem Permanentmagneten emittierten Magnetfeldes zugeordnet ist. Die Flussleitung im Material modifiziert dabei die Richtung der Magnetfeldlinien, so dass die Signal/Hub-Kennlinie auf einem weiten Hubbereich im Wesentlichen linear verläuft. Dadurch wird ein großer Messbereich bei weiter verbesserter Messgenauigkeit der Positionserkennung erreicht.

Der Magnetfeldsensor ist bei einer bevorzugten Ausführung der Erfindung in einer Ausnehmung des Ventilgehäuses und/oder der Führungshülse angeordnet, die sich im Wesentlichen quer zu einer Längsachse des Ventilelements erstreckt.

Als fertigungstechnisch vorteilhaft hat es sich erwiesen, wenn das Ventilelement zumindest abschnittsweise als Hohlzylinder ausgebildet ist und der Permanentmagnet mindestens einen Zylinder- oder Rundmagnet aufweist, der in dem Ventilelement angeordnet ist. Für die Permanentmagnete finden beispielsweise kunststoffgebundene SmCo-Seltenerd- oder Neodym-Eisen-Bor-Werkstoffe Verwendung.

Gemäß einem besonders bevorzugten Ausführungsbeispiel wird zumindest ein Hall-Effekt-Sensor als Magnetfeldsensor eingesetzt. Derartige Hall-Sensoren (Hall-Sonden) nutzen den Hall-Effekt zur Messung von Magnetfeldänderungen. Wird der Hall-Sensor von einem Strom durchflossen und in das senkrecht dazu verlaufende Magnetfeld des Proportionalmagneten gebracht, liefert er eine Ausgangsspannung, die proportional zur magnetischen Feldstärke ist. Die Position des Ventilelements kann aufgrund der gemessenen Feldstärkeänderung ermittelt und ein Sensor-Nutzsignal erzeugt werden. Beispielsweise finden programmierbare CMOS-Hall-Sensoren mit einem digitalen Signalprozessor Verwendung.

Die Führungshülse ist bei einem Ausführungsbeispiel aus einem magnetisch nicht leitenden Material, insbesondere austenitischem Stahl, Aluminium oder Kunststoff ausgebildet, so dass eine Magnetisierung durch den Permanentmagneten und dadurch eine ungewünschte Beeinflussung des Magnetfeldsensors wirkungsvoll verhindert ist.

Zur Abschirmung des Magnetfeldsensors vor äußeren Einflüssen, wie Fremdmagnetfeldern oder dergleichen ist dieser vorzugsweise durch zumindest eine Abschirmung aus einem magnetisch leitenden Material, insbesondere aus Stahl oder beschichtetem Kunststoff abgeschirmt. Die Abschirmung kann beispielsweise zumindest ein Gehäuseteil des Ventilgehäuses, ein den Magnet feldsensor zumindest abschnittsweise umgreifender Hohlzylinder, ein Abschirmblech, eine Abschirmfolie oder eine aufgebrachte Beschichtung sein. Die Abschirmung dient auch zur Flußkonzentration bzw. Konzentration der Feldlinien.

Die Ventilanordnung hat bei einem konkreten Ausführungsbeispiel einen Ventilschieber, der über das Ventilelement von der Kraft eines Elektromagneten (Stellmagneten) beaufschlagbar ist. Bei dieser Variante wird es bevorzugt, wenn die Abschirmung magnetisch leitend mit dem Elektromagnet verbunden ist, so dass das Streufeld des Elektromagneten kurzgeschlossen wird und keine Beeinflussung des Sensor-Ausgangssignals bewirkt.

Um zu verhindern, dass der Permanentmagnet im Betrieb der Ventilanordnung magnetisierbare Teilchen, beispielsweise Späne, Abrieb und dergleichen aus der Druckmittelströmung anzieht und diese sich an dem Permanentmagneten anlagern, ist der Permanentmagnet vorzugsweise außerhalb der Druckmittelströmung angeordnet. Dadurch wird eine Verschmutzung des Permanentmagneten durch magnetisierbare Partikel und damit eine Beeinflussung der Magnetfelder wirkungsvoll verhindert. Als besonders einfache Lösung hat es sich erwiesen, wenn der Permanentmagnet räumlich getrennt von der Druckmittelströmung in zumindest einem Aufnahmeraum angeordnet ist. Beispielsweise ist der Magnetfeldsensor im Bereich zwischen der Führungshülse und der Abschirmung angeordnet.

Der Magnetfeldsensor dient insbesondere als Positionsgeber zur Überwachung einer Ventilstellung, beispielsweise eines Druck- oder Wegeventils und/oder als Weggeber in einem Proportional-Wegeventil. Hierzu ist der Magnetfeldsensor vorzugsweise mit einem Mikroprozessor zur Erfassung und Auswertung der Sensorsignale verbunden.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 einen Längsschnitt durch eine erfindungsgemäße Ventilanordnung gemäß einem ersten Ausführungsbeispiel;
Figur 2 eine Detaildarstellung der Ventilanordnung aus Figur 1;
Figur 3 einen Längsschnitt durch einen Teil einer erfindungsgemäßen Ventilanordnung gemäß einem zweiten Ausführungsbeispiel;
Figur 4 eine Seitenansicht der Ventilanordnung aus Figur 3;
Figur 5 einen Längsschnitt durch eine erfindungsgemäße Ventilanordnung gemäß einem weiteren Ausführungsbeispiel und
Figur 6 eine Seitenansicht der Ventilanordnung aus Figur 5.

Die Erfindung wird im Folgenden anhand von 2/2-Proportional-Wegeventilen in Patronenbauweise erläutert, wie sie beispielsweise in der Mobilhydraulik als Einschraubventile Verwendung finden. Wie bereits eingangs erwähnt, ist die erfindungsgemäße Ventilanordnung jedoch keinesfalls auf derartige Ventiltypen beschränkt.

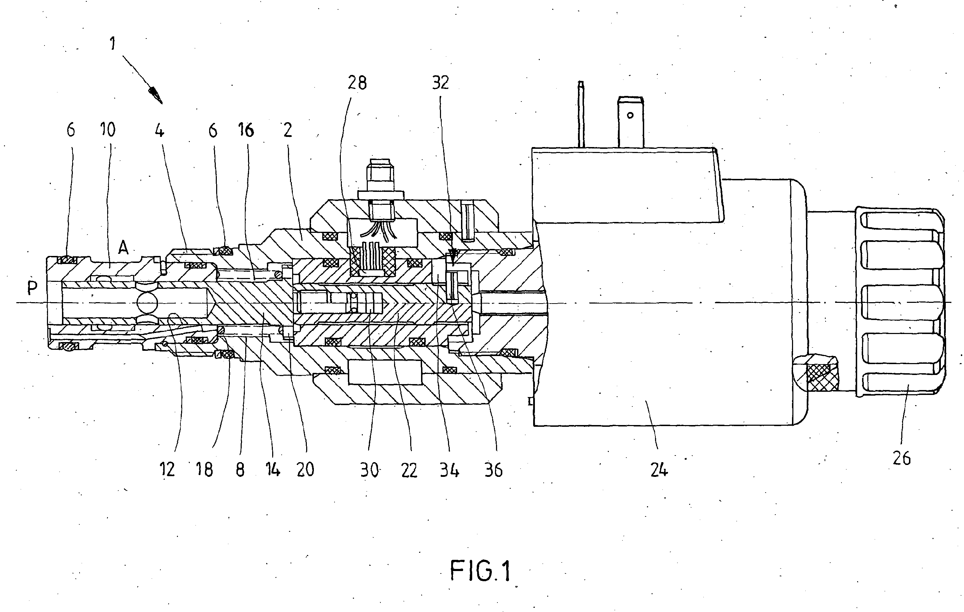

Figur 1 zeigt einen Längsschnitt durch eine erfindungsgemäße, als stetig verstellbares 2/2-Proportional-Wegeventil ausgeführte Ventilanordnung 1 mit einem patronenförmigen Ventilgehäuse 2, das über ein Gewinde 4 in ein Steuerblockgehäuse (nicht dargestellt) einschraubbar ist. Hierzu hat das Ventilgehäuse 2 im Durchmesser abgestufte Bereiche, die mit einer entsprechenden Stufenbohrung im Steuerblockgehäuse zusammenwirken, wobei über Dichtringe 6 ein Pumpenanschluss P und ein Arbeitsanschluss. A des Ventilgehäuses 2 gegeneinander abgedichtet sind. Das Ventilgehäuse 2 hat eine stufenförmige Aufnahmebohrung 8 in die ein Gehäuseeinsatz 10 eingesetzt ist, der eine.Ventilbohrung 12 aufweist, in der ein Ventilschieber 14 axial beweglich geführt ist, über den der Durchflussquerschnitt zwischen dem Pumpenanschluss P und dem Arbeitsanschluss A auf- und zusteuerbar ist. Der Ventilschieber 14 ist in Schließrichtung von einer in einem Federraum 16 angeordneten Druckfeder 18 belastet, die an dem Gehäuseeinsatz 10 des Ventilgehäuses 2 abgestützt ist und über einen Radialbund 20 an dem Ventilschieber 14 angreift. In Öffnungsrichtung ist der Ventilschieber 14 aus der dargestellten Schließstellung über ein an diesem stirnseitig anliegendes Ventilelement 22 von der Kraft eines Elektromagneten 24 gegen die Kraft der Druckfeder 18 beaufschlagbar. Der Ventilschieber 14 ist ferner über eine Hilfsbetätigungseinrichtung 26 ohne Magnetanregung betätigbar.

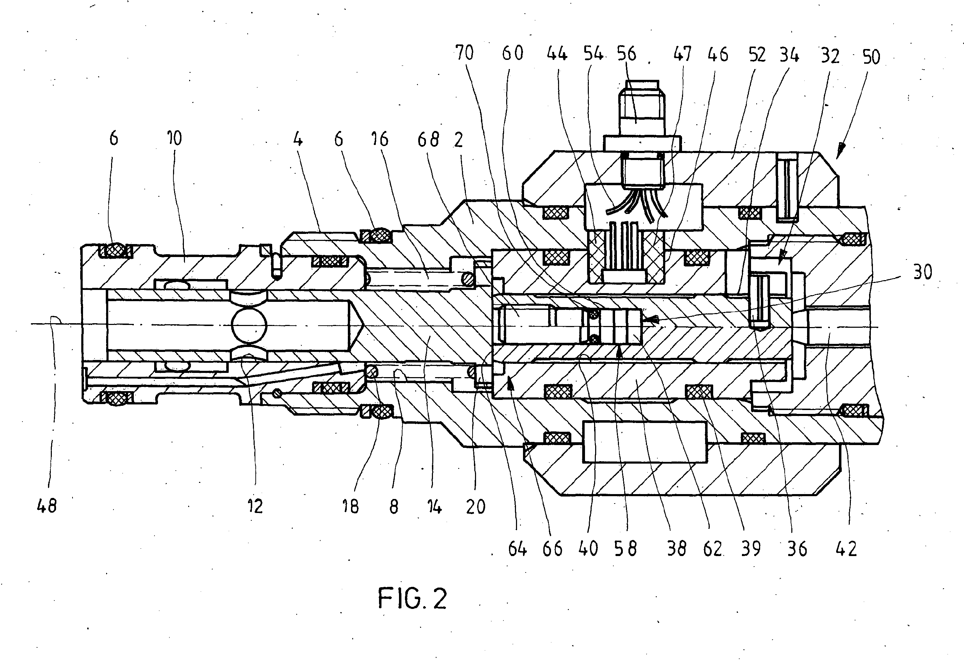

Die Ventilanordnung 1 hat einen Mägnetfeldsensor 28 zur Positionserkennung des Ventilelements 22 und damit des Ventilschiebers 14, der von dem Magnetfeld eines an dem beweglichen Ventilelement 22 angeordneten Permanentmagneten 30 beaufschlagt ist. Erfindungsgemäß ist der Permanentmagnet 30 über das Ventilelement 22 relativ zu dem Mägnetfeldsensor 28 drehfest aber axial verschiebbar in dem Ventilgehäuse 2 geführt, so dass ein im Wesentlichen homogenes Magnetfeld des Permanentmagneten 30.bei einer Axialverschiebung des Ventilelements 22 erreicht wird. Der Magnetfeldsensor 28 dient als Endschalter zur Überwachung einer Ventilstellung. Bei einem nicht dargestellten Ausführungsbeispiel findet der Magnetfeldsensors 28 als Weggeber des Ventilschiebers 14 Verwendung. Das Ventilelement 22 ist über eine Verdrehsicherung 32 drehfest und axial verschiebbar in dem Ventilgehäuse 2 geführt, die ein in einer Schiebekulisse 34 geführtes Führungselement 36 aufweist. Weitere Einzelheiten der Ventilanordnung 1 werden anhand der Detaildarstellung in Figur 2.erläutert.

Gemäß Figur 2 ist das Führungselement 36 als Zylinderstift' ausgebildet, der in dem Ventilelement 22 radial eingesetzt und abschnittsweise mit einer als Schiebekulisse 34 wirkenden Nut einer in das Ventilgehäuse 2 eingesetzten Führungshülse 38 in Eingriff ist. Die Führungshülse 38 ist mittels Dichtringen 39 gegen die Innenwandung des Ventilgehäuses 2 abgedichtet und hat eine Durchgangsbohrung 40 in der das Ventilelement 22 geführt ist. Da der Elektromagnet 24 lediglich kraftschlüssig über einen Anker 42 an dem Ventilelement 22 stirnseitig angreift, werden gegenüber einer formschlüssigen. Verbindung relativ geringe Drehmomente auf das Ventilelement 22 übertragen, so dass die Belastung der Verdrehsicherung 32 und damit die Reibungsverluste gering sind.

Als Magnetfeldsensor 28 wird ein Hall-Sensor verwendet, der über einen Kunststoffeinsatz 44 aus Polyoxymethylen (POM) in einer Sacklockbohrung 46.der Führungshülse 38 und einer Durchgangsbohrung 47 des Gehäuses 2 fixiert ist, die sich etwa quer zu einer Längsachse 48 des Ventilelements 22 erstrecken. Zur Abschirmung des Magnetfeldsensors 28 vor äußeren Einflüssen, wie Fremdmagnetfeldern oder dergleichen, ist dieser durch eine Abschirmung 50 aus einem magnetisch leitenden Material, beispielsweise aus Stahl oder beschichtetem Kunststoff abgeschirmt. Als Abschirmung 50 findet bei dem dargestellten Ausführungsbeispiel ein Gehäuseteil 52 des Ventilgehäuses 2 Verwendung, das den Magnetfeldsensor 28 nach außen hin abdeckt. Die Abschirmung 50 ist magnetisch leitend mit dem Elektromagnet 24 verbunden, so dass dessen Streufeld kurzgeschlossen wird und keine Beeinflussung des Sensor-Ausgangssignals bewirkt. Von dem Magnetfeldsensor 28 führen elektrische' Leitungen 54 zu einem in dem Gehäuseteil 52 fixierten Steckverbinder 56. Um zu verhindern, dass der Permanentmagnet 30 im Betrieb der Ventilanordnung 1 magnetisierbare Teilchen, beispielsweise, Späne, Abrieb und dergleichen aus der Druckmittelströmung anzieht und diese sich an dem Permanentmagneten 30 anlagern, ist dieser vorzugsweise, außerhalb der Druckmittelströmung angeordnet. Als besonders einfache Lösung hat es sich erwiesen, wenn der Permanentmagnet 30 räumlich getrennt von der Druckmittelströmung in zumindest einem Aufnahmeraum 58 angeordnet ist, der als Sacklochbohrung 60 zur benachbarten Aufnahme von drei etwa zylinderförmigen Permanentmagnetscheiben 62 ausgebildet und in eine Stirnfläche 64 eines Endabschnittes 66 des Ventilelements 22 eingebracht ist. Dadurch wird eine Verschmutzung des Permanentmagneten 30 durch magnetisierbare Partikel und damit eine Beeinflussung des Magnetfeldes wirkungsvoll verhindert. Die Permanentmagnetscheiben 62 sind über einen in die Sacklochbohrung 60 eingeschraubten . Gewindeeinsatz 68 in dem Ventilelement 22'fixiert und mittels eines Dichtrings 70 abgedichtet.

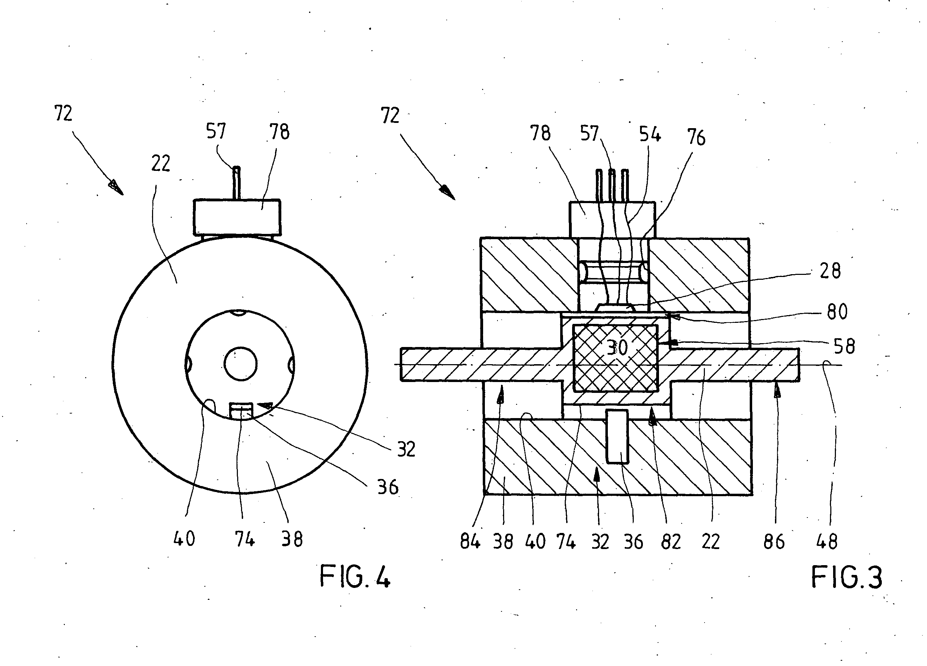

Gemäß Figur 3, die einen Längsschnitt durch einen Teil einer erfindungsgemäßen Ventilanordnung 72 im Bereich des Magnetfeldsensors 28 gemäß einem zweiten Ausführungsbeispiel zeigt, ist der Zylinderstift 36 in die bei dieser Variante aus magnetisierbarem Material, beispielsweise Stahl ausgebildete Führungshülse 38 eingebracht und greift in eine sich achsparallel zu der Längsachse 48 der Ventilanordnung 72 erstreckende Führungsnut 74 des Ventilelements 22 ein. Wie Figur 4 zu entnehmen ist, die eine Seitenansicht der Ventilanordnung 72 aus Figur 3 zeigt, hat die Führungsnut 74 einen im Wesentlichen rechteckigen Querschnitt. Die Verdrehsicherung 32 ist auf der dem Magnetfeldsensor 28 gegenüberliegenden Seite angeordnet, so dass eine ggf. auftretende Torsion des Ventilelements 22 die Messgenauigkeit im Wesentlichen nicht beeinflusst. Die Aufnahme für den Magnetfeldsensor 28 ist als Radialbohrung 76 in die Führungshülse 38 eingebracht, wobei der Magnetfeldsensor 28 über einen Kunststoffeinsatz 78 möglichst nahe an der Innenmündung 80 der Radialbohrung 76 angeordnet ist.' Die Flussleitung in der magnetisch leitenden Führungshülse 38 führt hierbei zu einer Flusskonzentration des von dem Permanentmagneten 30 emittierten Magnetfeldes, so dass ein großer, linearer Messbereich bei weiter verbesserter Genauigkeit der Positionserkennung erreicht wird. Der Magnetfeldsensor 28 ist über elektrische Leitungen 54 und Kontaktpins 57 kontaktierbar. Der Permanentmagnet 30 ist bei diesem Ausführungsbeispiel in einem Aufriahmeraum 58 des Ventilelements 22 angeordnet, der im Bereich eines Führungsabschnittes 82 des Ventilelements 22 ausgebildet ist. Der Führungsabschnitt 82 geht endseitig in jeweils einen radial' zurückgesetzten' Betätigungsabschnitt 84, 86 über.

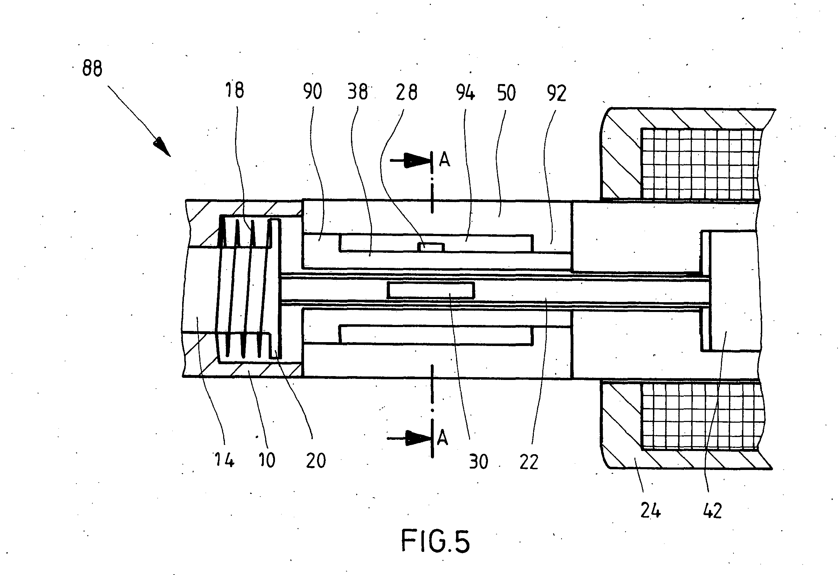

Figur 5 zeigt einen Längsschnitt durch eine erfindungsgemäße Ventilanordnung 88 gemäß einem weiteren Ausführungsbeispiel, bei dem das Ventilelement 22 als Hohlzylinder ausgebildet ist und einen stabförmigen Permanentmagneten 30 aufnimmt. Der Hohlzylinder 22 ist dichtend in Anlage an den Anker 42 des Elektromagneten 24 und den Ventilschieber 14 gebracht, so dass der Permanentmagnet 30 im Betrieb der Ventilanordnung 88 keine magnetisierbare Teilchen aus der Druckmittelströmung anziehen kann. Dadurch wird eine Verschmutzung des Permanentmagneten 30 durch magnetisierbare Partikel und damit eine Beeinflussung der Magnetfelder wirkungsvoll verhindert.

Die Führungshülse 38 ist bei diesem Ausführungsbeispiel als Druckrohr ausgebildet und mit einem außenliegenden Radialbund 90 versehen. Zur Abschirmung von äußeren Einflüssen, wie Fremdmagnetfeldern oder dergleichen ist der Magnetfeldsensor 28 durch eine rohrförmige Abschirmung 50 aus einem magnetisch leitenden Material, beispielsweise aus Stahl oder beschichtetem Kunststoff abgeschirmt, die über einen innenliegenden Radialbund 92 in Anlage an die. Führungshülse 38 gebracht ist, wobei dessen Innenfläche an dem Radialbund 90 der Führungshülse 38 anliegt, so dass ein Sensorraum 94 zur Aufnahme des Magnetfeldsensors 28 ausgebildet ist. Die Abschirmung 50 ist magnetisch leitend mit dem Elektromagnet 24 verbunden, so dass das Streufeld des Elektromagneten 24 kurzgeschlossen wird und keine. Beeinflussung des Sensor-Ausgangssignals bewirkt.

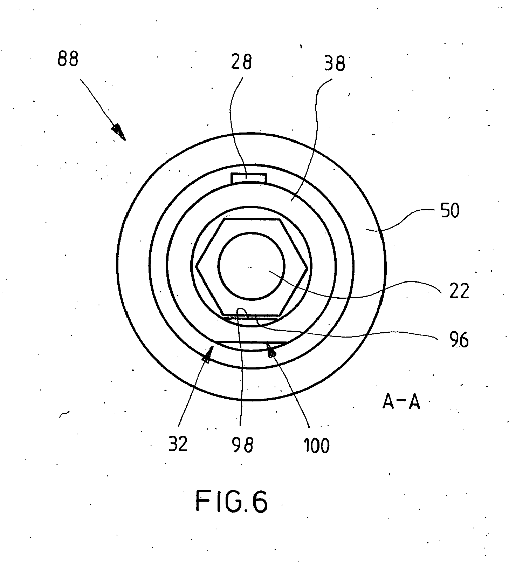

Gemäß Figur 6, die einen Schnitt entlang der Linie A-A in Figur 5 zeigt, erfolgt die Verdrehsicherung bei diesem Ausführungsbeispiel mittels einer Abflachung 96 des Ventilelements 22, die mit einer Abflachung 98 der Führungshülse 38 zusammenwirkt. Hierbei hat es sich als vorteilhaft erwiesen, die Abflachung 98 als tangential in die Führungshülse 38 eingebrachte Einprägung 100 auszubilden. Diese kann beispielsweise mit einem Prägewerkzeug mit Gegenhalter konturnah in die Führungshülse 38 eingebracht sein. Das Ventilelement 22 ist als etwa sechskantförmiges Rohr ausgebildet, das über die Abflachung 96 in Anlage an die Einprägung 100 der Führungshülse 38 gebracht und dadurch drehfest geführt ist.

Die erfindungsgemäße Ventilanordnung 1, 72, 88 ist nicht auf die beschriebenen Ausführungsbeispiele mit in dem Ventilelement 22 angeordnetem Permanentmagneten 30 beschränkt, vielmehr kann dieser auch außerhalb des Ventilelements 22 angeordnet sein. Des Weiteren kann der Permanentmagnet 30 an dem Ventilschieber 14 angebracht sein. Der Permanentmagnet 30 und der Magnet feld sensor 28 können derart zueinander angeordnet sein, dass der Magnetfeldsensor 28 das Magnet feld des Permanentmagneten 30 erfasst, wenn sich das Ventilelement 22 in einer Endstellung befindet, oder so, dass der Magnetfeldsensor 28 das Magnetfeld während der gesamten Bewegung des Ventilelements 22 erfasst, um die Positionsänderung des Ventilelements 22 ständig zu ermitteln.

Offenbart ist eine Ventilanordnung 1, 72, 88 mit einem Ventilgehäuse 2 in dem zumindest ein Ventilelement 22 verschiebbar geführt ist, wobei mindestens ein Magnetfeldsensor 28 zur Positionserkennung des Ventilelements 22 vorgesehen ist, der von dem Magnetfeld zumindest eines an dem beweglichen Ventilelement 22 angeordneten Permanentmagneten 30 beaufschlagt ist. Erfindungsgemäß ist der Permanentmagnet 30 relativ zu dem Magnetfeldsensor 28 drehfest aber axial verschiebbar in dem Ventilgehäuse 2 geführt.

### Bezugszeichenliste

- 1: Ventilanordnung
- *2*: Ventilgehäuse
- 4: Gewinde
- 6: Dichtring
- 8: Aufnahmebohrung
- 10: Gehäuseeinsatz
- 12: Ventilbohrung
- 14: Ventilschieber
- 16: Federraum
- 18: Druckfeder
- 20: Radialbund
- 22: Ventilelement
- 24: Elektromagnet
- 26: Hilfsbetätigungseinrichtung
- 28: Magnetfeldsensor
- 30: Permanentmagnet
- 32: Verdrehsicherung
- 34: Schiebekulisse
- 36: Führungselement
- 38: Führungshülse
- 39: Dichtring
- 40: Durchgangsbohrung
- 42: Anker
- 44: Kunststoffeinsatz
- 46: Sacklochbohrung
- 47: Durchgangsbohrung
- 48: Längsachse
- 50: Abschirmung
- 52: Gehäuseteil
- 54: Leitung
- 56: Steckverbinder
- 57: Kontaktpin
- 58: Aufnahmeraum
- 60: Sacklochbohrung
- 62: Permanentmagnetscheiben
- 64: Stirnfläche
- 66: Endabschnitt
- 68: Gewindeeinsatz
- 70.: Dichtring
- 72: Ventilanordnung
- 74: Führungsnut
- 76: Radialbohrung
- 78: Kunststoffeinsatz
- 80: Innenmündung
- 82: Führungsabschnitt
- 84: Betätigungsabschnitt
- 86: Betätigungsabschnitt
- 88: Ventilanordnung
- 90: Radialbund
- 92: Radialbund
- 94: Sensorraum
- 96: Abflachung
- 98: Abflachung
- 100: Einprägung

## Patentansprüche

1. Ventilanordnung mit einem Ventilgehäuse (2) in dem zumindest ein Ventilelement (22) verschiebbar geführt ist, wobei mindestens ein Magnetfeldsensor (28) zur Positionserkennung des Ventilelements (22) vorgesehen ist, der von dem Magnetfeld zumindest eines an dem beweglichen Ventilelement (22) angeordneten Permanentmagneten (30) beaufschlagt ist, **dadurch gekennzeichnet, dass** der Permanentmagnet (30) relativ zu dem Magnetfeldsensor (28) drehfest aber axial verschiebbar in dem Ventilgehäuse (2) geführt ist.

2. Ventilanordnung nach Anspruch 1, wobei das Ventilelement (22) über zumindest eine Verdrehsicherung (32) drehfest aber axial verschiebbar in dem Ventilgehäuse (2) geführt ist.

3. Ventilanordnung nach Anspruch 2, wobei die Verdrehsicherung (32) zumindest ein in einer Schiebekulisse (34) geführtes Führungselement (36) aufweist.

4. Ventilanordnung nach Anspruch 3, wobei das Führungselement (36) ein Zylinderstift ist, der in das Ventilelement (22) oder eine diesem zugeordnete Führungshülse (38) eingesetzt ist und abschnittsweise mit einer als Schiebekulisse (34) wirkenden Nut der Führungshülse (38) bzw. des Ventilelements (22) in Eingriff ist.

5. Ventilanordnung nach Anspruch 1 oder 2, wobei das Ventilelement (22) zumindest eine Abflachung (96) aufweist, die mit mindestens einer Abflachung (98) der Führungshülse (38) als Verdrehsicherung zusammenwirkt.

6. Ventilanordnung nach Anspruch 5, wobei die Abflachung (98) eine tangential in die Führungshülse (38) eingebrachte Einprägung (100) ist.

7. Ventilanordnung nach einem der Ansprüche 2 bis 6, wobei die Verdrehsicherung (32) im Bereich des Magnetfeldsensors (28) angeordnet ist.

8. Ventilanordnung nach einem der vorhergehenden Ansprüche, wobei dem Magnetfeldsensor (28) zumindest ein magnetisierbares Material zur Flusskonzentration des von dem Permanentmagneten (30) emittierten Magnetfeldes zugeordnet ist.

9. Ventilanordnung nach einem der vorhergehenden Ansprüche, wobei der Magnetfeldsensor (28) in einer Ausnehmung (46, 76) einer Führungshülse (38) und/oder des Ventilgehäuses (2) angeordnet ist, die sich im Wesentlichen quer zu einer Längsachse (48) des Ventilelements (22) erstreckt.

10. Ventilanordnung nach einem der vorhergehenden Ansprüche, wobei der Magnetfeldsensor (28) zumindest einen Hall-Effekt-Sensor aufweist.

11. Ventilanordnung nach einem der vorhergehenden Ansprüche, wobei der Magnetfeldsensor (28) durch zumindest eine Abschirmung (50) aus einem magnetisch leitenden Material, insbesondere aus Stahl oder stahlverstärktem Kunststoff, vor äußeren Einflüssen, wie Fremdmagnetfeldern oder dergleichen, im Wesentlichen abgeschirmt ist.

12. Ventilanordnung nach Anspruch 11, wobei die Abschirmung (50) zumindest ein Gehäuseteil (52) des Ventilgehäuses (2), ein Hohlzylinder, ein Abschirmblech, eine Abschirmfolie und/oder eine Beschichtung ist.

13. Ventilanordnung nach Anspruch 11 oder 12, wobei die Abschirmung (50) magnetisch leitend mit einem Stellmagnet (24) des Ventils verbunden ist.

14. Ventilanordnung nach einem der vorhergehenden Ansprüche, wobei der Permanentmagnet (30) räumlich getrennt von der Druckmittelströmung in zumindest einem Aufnahmeraum (58, 94) angeordnet ist.

15. Ventilanordnung nach einem der vorhergehenden Ansprüche, wobei der Magnetfeldsensor (28) als Positionsgeber zur Überwachung einer Ventilstellung, insbesondere eines Druck- oder Wegeventils und/oder als Weggeber in einem Proportional-Wegeventil dient.
